# EUROPEAN PATENT SPECIFICATION

(11) **EP 1 837 413 B1**
(45) Date of publication and mention of the grant of the patent: **07.09.2011**
(21) Application number: 05819832.6
(22) Date of filing: 22.12.2005
(51) Int. Cl.: C22C 38/00, C23C 8/22, F16C 33/62

(54) **ROLLING-SLIDING ELEMENTS AND PROCESS FOR PRODUCTION OF THE SAME**
ROLL-GLEIT-ELEMENTE UND HERSTELLUNGSVERFAHREN DAFÜR
ELEMENTS ROULANTS-COULISSANTS ET PROCEDE POUR LES PRODUIRE

(30) Priority: 24.12.2004 JP 2004373658
(43) Date of publication of application: 26.09.2007
(73) Proprietor: JTEKT Corporation, Osaka-shi Osaka 542-8502 (JP)
(72) Inventor: KIZAWA, Katsuhikoco AICHI STEEL CORPORATION, Tokai-shi,Aichi 476-8666 (JP); FUJIWARA, Terumoto, Yamatotakada-shi, Nara 6350058 (JP); NISHIKAWA, Tomoaki, Tokai-shi, Aichi 4768666 (JP); MIKAMI, Tsuyoshi, Tokai-shi, Aichi 4768666 (JP)
(74) Representative: Steinmeister, Helmut
(86) International application number: PCT/JP2005/023565
(87) International publication number: WO 2006/068205

(56) References cited:
- EP-A1- 1 400 606
- EP-A2- 1 070 760
- EP-A2- 1 258 644
- JP-A- 6 293 939
- JP-A- 9 072 342
- JP-A- 2002 356 738
- JP-A- 2004 285 460
- JP-A- 2004 285 474

## Description

### Technical Field

The present invention relates to a rolling-sliding part, and to a method for producing the rolling-sliding part. More particularly, the present invention relates to a rolling-sliding part which is suitable for use as, for example, a sliding bearing part, or a rolling part serving as a bearing ring or a rolling element of a rolling bearing which, during use, is exposed to lubricant oil containing foreign matter; and to a method for producing the rolling-sliding part.

As used in this specification and the appended claims, the term "rolling-sliding part" refers to a part which is subjected to rolling contact alone, sliding contact alone, or combination of rolling contact and sliding contact.

### Background Art

A rolling sliding part of the above kind is known, for example, from JP 2004-285460 and EP 1 070 760.

There has been known a rolling-sliding part which serves as a bearing ring or rolling element of a rolling bearing used with lubricant oil containing foreign matter or a rolling bearing whose size and weight are reduced for the purpose of, for example, improving the fuel efficiency of automobiles, the rolling-sliding part being produced by subjecting, to carburization treatment, a corresponding material which has been processed to have a predetermined shape from bearing steel (high carbon chromium bearing steel) such as JIS SUJ2, through heating, at 840 to 870°C, in a carburization atmosphere having a carbon potential of 1.2% or more for three hours or more, followed by quenching and then tempering, wherein a surface layer region of the rolling-sliding part (i.e., a region from a surface of the part to a depth to which the maximum shear stress is applied) has a total carbon content of 1.0 to 1.6 wt.%; the matrix of the surface layer region has a dissolved carbon content (hereinafter may be referred to as "C_{dissol} content") of 0.6 to 1.0 wt.%; the surface layer region contains precipitated carbide particles; the amount of the carbide particles is 5 to 20% in area ratio; and the carbide particles have a particle size of 3 µm or less (see Patent Document 1).

However, a rolling-sliding part used in applications requiring reduction in size of the part or further prolongation of life of the part under more severe conditions is required to have performance better than that of the rolling-sliding part described in Patent Document 1. As has been known, particularly when a rolling-sliding part is used in lubricant oil containing foreign matter, the service life of the part is considerably shortened, as compared with the case where the part is used in lubricant oil containing no foreign matter. Therefore, keen demand has arisen for measures to solve such a problem. In an attempt to prolong service life in lubricant oil containing foreign matter, conventionally, soft residual austenite has been caused to be present in a surface layer region of a carburized rolling-sliding part in an amount of about 20%. Since residual austenite has the effect of reducing concentration of stress in the vicinity of indentations generated due to inclusion of foreign matter, it exhibits the effect of retarding occurrence and development of cracks caused by generation of indentations. Therefore, in an attempt to further improve the performance of a conventional rolling-sliding part, the residual austenite content of a surface layer region of the part is further increased to a high level (e.g., more than 30%).

However, an increase in residual austenite content of a surface layer region of a rolling-sliding part made of JIS SUJ2 causes the following serious problem. Specifically, when the amount of residual austenite, which is a soft structure, is increased to 40% or more, difficulty is encountered in attaining a Rockwell C hardness (hereinafter may be referred to as "HRC") of 62 or more, resulting in failure to hold a strength required for a bearing. A conceivable measure for solving this problem is to subject a processed JIS SUJ2 material to high-concentration carburization (i.e., the carbon content of a surface layer region is increased to, for example, 1.6 wt.% or more). However, when a processed JIS SUJ2 material is subjected to carburization treatment, generally, an M₃C-type carbide (i.e., Fe₃C or (Fe, Cr)₃C} having a Vickers hardness of 1,150 to 1,760 (e.g., cementite) is precipitated in a surface layer region of the part. Such an M₃C-type carbide is grown during carburization at a high growth rate, as compared with the case of another alloy carbide (e.g., M₇C₃ or MC) (reference: Takayama, J. Japan Inst. Metals, 11, 45 (1981), 1195), and exhibits low hardness (M₇C₃ or MC exhibits a Vickers hardness of 1,800 or more). Therefore, a problem arises in that carbide particles having a large average particle size are grown, and thus the degree of dispersion precipitation hardening is reduced; i.e., hardness increasing effect by carbide precipitation is reduced. Also, a problem arises in that coarsening of carbide particles is induced, and thus sufficient rolling life improving effect fails to be obtained.

An attempt to employ an M₇C₃-type carbide having an increased Cr content, thereby improving the rolling life of a rolling part in a lubricant containing foreign matter is not novel *per se,* and such an attempt has already been proposed by the invention disclosed in, for example, Patent Document 2. The disclosed invention describes the type and area ratio of carbides precipitated through carburization. However, the disclosed invention does not specifically describe conditions (e.g., number and size) of dispersed carbide particles, and only describes that coarsening of the carbide particles must be prevented. Therefore, the disclosed invention involves problems in that carbide particles are not sufficiently micronized, and, when the residual austenite content is increased to a high level (i.e., about 50%), high hardness fails to be maintained, and sufficient life improving effect fails to be obtained.

Patent Document 3 proposes a method in which existing case hardening steel is subjected to complete carburization or carbo-nitriding treatment so as to maintain a certain level of surface hardness and to increase residual austenite content, thereby improving rolling life in a lubricant containing foreign matter. However, the described method involves a problem similar to that in the case where JIS SUJ2 is employed as described above; i.e., sufficient rolling life fails to be attained.
Patent Document 1: Japanese Patent Application Laid-Open (*kokai*) No. 2004-52101
Patent Document 2: Japanese Patent Publication (*kokoku*) No. H06-11899
Patent Document 3: Japanese Patent Application Laid-Open (*kokai*) No. H01-55423

### Disclosure of the Invention

### Problems to be Solved by the Invention

An object of the present invention is to provide a rolling-sliding part which solves the aforementioned problems, and which, particularly when employed as, for example, a sliding bearing part, or a bearing ring or rolling element of a rolling bearing which, during use, is exposed to lubricant oil containing foreign matter, can further prolong the service life of the sliding bearing part or the bearing ring or rolling element. Another object of the present invention is to provide a method for producing the rolling-sliding part.

### Means for Solving the Problems

The invention according to claim 1 provides a rolling-sliding part formed of steel having, in a surface thereof, a carburized surface layer region, wherein the surface layer region contains precipitated carbide particles in an amount of 9 to 30% in area ratio; M₇C₃-type and/or M₂₃C₆-type carbide particles account for 50% or more in area ratio of all the precipitated carbide particles contained in the surface layer region; the carbide particles contained in the surface layer region have an average particle size of 0.2 to 0.4 µm; and the surface layer region has a residual austenite content of 35 to 60%.

As used herein, the term "surface layer region" refers to a depth region under a rolling-sliding surface affecting life, which region contains, through carburization treatment, C in an amount clearly greater than that of C contained in an internal region. For example, in the case of a rolling-sliding part used in lubricant oil containing foreign matter, "surface layer region" is a region from the outermost surface of the part to a depth of 0 to 50 µm (the same shall apply hereinafter).

The invention according to claim 1 has been accomplished on the basis of the below-described findings, which are obtained as a result of extensive studies for the purpose of enabling steel to maintain high hardness even when a surface layer region of the steel has high residual austenite content, as well as of improving the life of the steel when it is used in a lubricant containing foreign matter (hereinafter the life may be referred to simply as "life in the presence of foreign matter").

(1) In generally employed machine structural steel, M₃C-type carbide particles are precipitated in a high-carbon-content carburized layer in a steel surface, and remain precipitated without dissolving in the matrix after carburization treatment. However, as in the case of the invention according to claim 1, when M₇C₃-type and/or M₂₃C₆-type carbide particles, which have high hardness and are not readily coarsened, account for 50% or more in area ratio of all the precipitated carbide particles contained in the surface layer region, the particle size of the carbide particles contained in the carburized surface layer region can be reduced as compared with the case of the steel predominantly containing M₃C-type carbide particles, and life in the presence of foreign matter can be considerably improved. As described above, an M₇C₃-type carbide or an M₂₃C₆-type carbide has high hardness. Therefore, the surface layer region can maintain high hardness, although the region contains a large amount of residual austenite.

(2) In order to precipitate finer carbide particles in the surface layer region for enhancing the effect of (1) described above, steel containing a large amount of Cr is subjected to spheroidization for processability improvement before carburization, so as to precipitate carbide particles in large amounts, followed by carburization treatment at high carbon concentration. As a result, when carbon enters through the surface of a part material by carburization treatment, fine carbide particles can be precipitated and grown around precipitation nuclei (i.e., numerous carbide particles which have been precipitated before carburization treatment and which do not dissolve in the matrix), and can be prevented from coarsening. Therefore, life in the presence of foreign matter can be improved.

After spheroidization, carbide particles have an average particle size of 0.1 to 0.5 µm, and the number of precipitated carbide particles having a size of 0.1 µm or more is 1,500,000 particles or more per mm². Precipitation of such fine carbide particles requires heating to a temperature in the vicinity of 800°C, and slow cooling at a rate of 25°C/h or less. When a processed part material containing such precipitated carbide particles is subjected to high-concentration carburization treatment as described hereinbelow, a part having a surface layer region containing numerous precipitated carbide particles having an average particle size of 0.2 to 0.4 µm can be obtained.

During carburization treatment, a portion of carbide particles which have existed before, carburization treatment dissolve in the matrix through heating. The greater the amount of the resultant solid solution, the smaller the number (amount) of carbide particles which remain after carburization treatment. That is, the number (amount) of carbide particles present after carburization treatment varies depending on the extent to which carbide particles that have existed before carburization treatment remain without dissolving in the matrix. The amount of carbide particles which do not dissolve in the matrix and remain after carburization treatment can be generally determined by counting the number of carbide particles remaining in an internal non-carburized layer. Specifically, the amount of carbide particles remaining in an internal non-carburized layer is 300,000 particles/mm² or more. When carburization treatment is carried out so that carbide particles remain in large amounts in a non-carburized layer, fine carbide particles predominantly containing M₇C₃-type and/or M₂₃C₆-type carbide particles are precipitated in large amounts in the carburized layer. As described above, M₇C₃-type or M₂₃C₆-type carbide particles are grown during carburization at a rate lower than the growth rate of M₃C-type carbide particles, and thus the size of particles grown through carburization can be reduced, resulting in considerable improvement of life in the presence of foreign matter. In order to prevent considerable reduction in amount of carbide particles which do not dissolve in the matrix (hereinafter the carbide particles may be referred to simply as "undissolved carbide particles"), carburization is carried out at such a low temperature that does not greatly affect productivity.

In the rolling-sliding part of the invention according to claim 1, the respective numerical parameters are determined so as to fall within the aforementioned ranges, for the reasons described below.

### Amount of M₇C₃-type and/or M₂₃C₆-type carbide particles in all the precipitated carbide particles

When, as described above, an M₇C₃-type carbide and an M₂₃C₆-type carbide, which have high hardness, are precipitated in the form of fine particles so that the resultant carbide particles account for 50% or more in area ratio of all the precipitated carbide particles, long life can be attained. As described hereinbelow, an M₇C₃-type carbide or an M₂₃C₆-type carbide, which has a hardness higher than that of an M₃C-type carbide and tends not to form coarse particles, can be preferentially precipitated by generally causing Cr (i.e., a carbide-forming element) to be contained in a large amount (3.2 to 5.0 wt.%), which is greater than that of Cr contained in conventional steel, or by adding an appropriate amount of Mo.

### Area ratio and average particle size of carbide particles in surface layer region

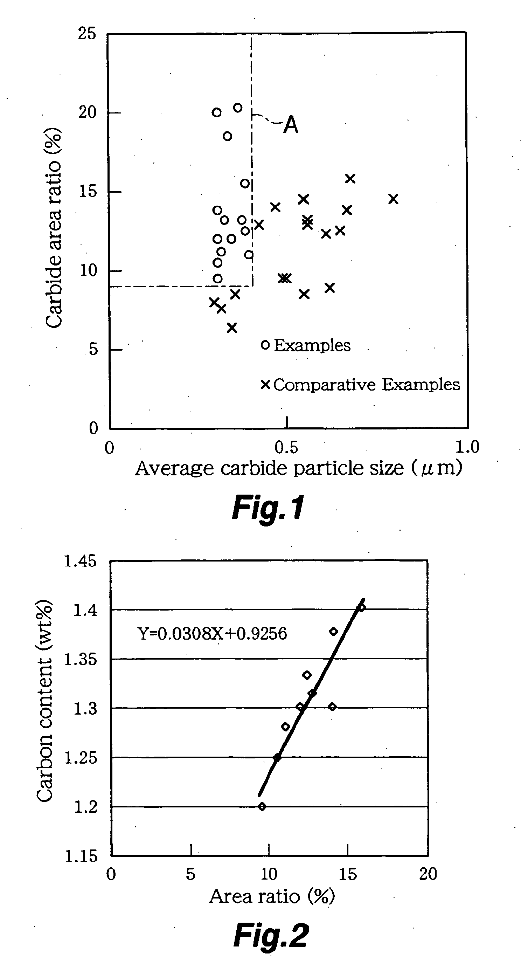

The data of evaluation tests in the below-described Examples and Comparative Examples indicate that L₁₀ life ratio (i.e., ratio to L₁₀ life of quenched and tempered JIS SUJ2 (taken as 1)) is 10 or more in a region defined by chain line A in Fig. 1 showing the relation between area ratio and average particle size of carbide particles and L₁₀ life ratio. Therefore, the minimum of area ratio in the long life region defined by chain line A (i.e., 9%) is determined to be the lower limit of area ratio, and the maximum of average particle size in this region (i.e., 0.4 µm) is determined to be the upper limit of average particle size. The upper limit of area ratio (i.e., 30%) is determined from the viewpoint that an area ratio exceeding the upper limit causes generation of coarse carbide particles, from which rolling fatigue cracks start, resulting in shortening of life of the rolling-sliding part. The upper limit of area ratio is preferably 20%, more preferably 15%. The lower limit of average particle size (i.e., 0.2 µm) is determined from the viewpoint that when an average particle size is below the lower limit in the carburization process, difficulty is encountered in attaining an area ratio of 9% or more through a currently employed carburization technique.

In the relation between average particle size and area ratio of carbide particles contained in conventional steel, generally, the higher the area ratio, the greater the average particle size. In contrast, a novel feature of the invention according to claim 1 resides in that small average particle size is attained even when area ratio is high. Thus, a point to achieve this feature is that, as described above, fine carbide particles are precipitated in large amounts through spheroidizing annealing treatment performed before carburization treatment, and then carburization treatment is carried out under such conditions that most of the carbide particles remain after the treatment.

### Residual austenite content of surface layer region

When the residual austenite content of a surface layer region is 35 to 60%, compressive stress in the surface layer region, which would otherwise be caused by foreign matter contained in a lubricant oil employed, can be reduced, and occurrence and development of cracks can be suppressed, whereby the life of a rolling bearing employing the rolling-sliding part can be further prolonged. However, when the residual austenite content is less than 35%, such effects are insufficiently obtained. In contrast, when the residual austenite content exceeds 60%, even if reduction in hardness is suppressed through precipitation of an M₇C₃-type and/or M₂₃C₆-type carbide, which exhibits high hardness, difficulty is encountered in increasing the HRC of the surface layer region to 62 or more, and a problem arises in that dimensional stability (i.e., an important performance parameter of a bearing) is impaired.

The invention provides a rolling-sliding part formed of steel containing C: 0.7 to 0.9 wt.% and Cr: 3.2 to 5.0 wt.%, and having, in a surface thereof, a carburized surface layer region, wherein the surface layer region contains carbide particles having an average particle size of 0.2 to 0.4 µm; the surface layer region contains the carbide particles in an amount of 9 to 30% in area ratio; and the surface layer region has a residual austenite content of 35 to 60%.

A characteristic feature of the present invention resides in that fine carbide particles are precipitated through carburization, whereby life in the presence of foreign matter is improved. Therefore, M₇C₃-type and/or M₂₃C₆-type carbide particles, which are grown at low rate, must be preferentially precipitated through carburization heating, rather than M₃C-type carbide particles. Optimization of C and Cr contents is important for achieving such preferential precipitation, and therefore, in the invention C and Cr content ranges are specified. A critical point for formation of fine carbide particles is the same as that described above in the invention according to claim 1.

In the rolling-sliding part of the invention the respective numerical parameters are determined so as to fall within the aforementioned ranges, for the reasons described below. The reasons for determining area ratio and average particle size of carbide particles in the surface layer region, and residual austenite content of the surface layer region are the same as those described above in the invention according to claim 1.

### C content

C is an element required for increasing hardness after quenching, and for attaining internal hardness for securing strength. C is an essential element for causing fine undissolved carbide particles to remain in large amounts before carburization treatment, and causing the carbide particles to remain in large amounts even after carburization treatment, thereby achieving long life. Therefore, C must be added in a sufficient amount required for formation of undissolved carbide particles, and thus the lower limit of C content is determined to be 0.7 wt.%. Meanwhile, when C is excessively incorporated, hardness is increased after spheroidizing annealing treatment, and machinability before carburization is impaired. In addition, as described below, due to a Cr content higher than that of conventional bearing steel, coarse eutectic carbide particles, from which fatigue fracture tends to start, are readily formed during production of steel products. Therefore, the upper limit of C content is determined to be 0.9 wt.%.

### Cr content

In the present invention, Cr is the most important carbide-forming element. That is, Cr is an essential element for forming large amounts of undissolved carbide particles before carburization treatment, and precipitating, through carburization treatment, fine carbide particles (in particular, M₇C₃-type and/or M₂₃C₆-type carbide particles having high hardness) in a carburized surface layer by the action of the undissolved carbide particles serving as precipitation nuclei, thereby achieving long life. In order to attain the aforementioned effects sufficiently, Cr must be incorporated in an amount greater than that of Cr contained in conventional bearing steel, and therefore the lower limit of Cr content is determined to be 3.2 wt.%. Meanwhile, when Cr is excessively incorporated, difficulty is encountered in preventing formation of coarse eutectic carbide particles, from which fatigue fracture starts, and production cost is increased. Therefore, the upper limit of Cr content is determined to be 5.0 wt.%.

As described above, in the relation between average particle size and area ratio of carbide particles contained in conventional steel, generally, the higher the area ratio, the greater the average particle size. In contrast, a novel feature of the invention according to claim 2 resides in that small average particle size is attained even when area ratio is high. Thus, a point to achieve this feature is that steel containing elements as described in claim 2, with C and Cr contents being optimized, is subjected to spheroidization so as to precipitate fine carbide particles in large amounts, followed by high-concentration carburization, to thereby precipitate alloy carbide particles.

In a rolling-sliding part of an invention according to claim 2, which is a specific preferred embodiment of the invention the surface layer region has a total carbon content of 1.2 to 1.8 wt.%.

In the rolling-sliding part of the invention according to claim 2, the total carbon content of the surface layer region is determined to be 1.2 to 1.8 wt.% for the reasons described below.

Specifically, the data of evaluation tests in the below-described Examples indicate that when a material having the alloy composition described above in the invention according to claim 1 is subjected to carburization treatment through heating, at 870 to 950°C, in a carburization atmosphere having a carbon potential of 1.3%, the carbide area ratio of a surface layer region is correlated with the carbon content of the surface layer region as shown in Fig. 2, and the regression equation: Y = 0.0308X + 0.9256. Thus, the total carbon content of the surface layer region is determined to be 1.2 to 1.8 wt.% by substituting the aforementioned area ratio (9 to 30%) for X of the regression equation.

In a rolling-sliding part of the invention according to claim 3, which is a specific embodiment of the invention according to claim 1 or 2, the surface layer region contains carbide particles in an amount of 10 to 20% in area ratio.

In a rolling-sliding part of the invention according to claim 4, which is a specific embodiment of the invention according to any of claims 1 to 3, the surface layer region has a residual austenite content of 40 to 50%.

A rolling-sliding part of the invention is formed of steel containing C: 0.7 to 0.9 wt.%, Si: 0.05 to 0.7 wt.%, Mn: 0.05 to 0.7 wt.%, Cr: 3.2 to 5.0 wt.%, Al: 0.04 wt.% or less, P: 0.03 wt.% or less, S: 0.03 wt.% or less, Ti: 0.005 wt.% or less, 0: 0.0015 wt.% or less, at least one of Mo: less than 1.0 wt.% and V: less than 0.50 wt.%, and Fe and unavoidable impurities: balance.

The C and Cr contents are determined so as to fall within the above ranges for the same reasons as described above in the invention. The reasons for determining the amounts of components other than C and Cr will be described below.

An invention according to claim 5 provides a rolling bearing comprising an inner bearing ring, an outer bearing ring, and a rolling element, wherein at least one of the inner bearing ring, the outer bearing ring, and the rolling element is formed of a part as recited in any of claims 1 to 4.

The invention according to claim 6 provides a method for producing a rolling-sliding part, characterized in that the method comprises inter alia subjecting, to spheroidizing annealing treatment, steel containing C: 0.7 to 0.9 wt.%, Si: 0.05 to 0.7 wt.%, Mn: 0.05 to 0.7 wt.%, Cr: 3.2 to 5.0 wt.%, Al: 0.04 wt.% or less, P: 0.03 wt.% or less, S: 0.03 wt.% or less, Ti: 0.005 wt.% or less, O: 0.0015 wt.% or less, at least one of Mo: less than 1.0 wt.% and V: less than 0.50 wt:%, and Fe and unavoidable impurities: balance, thereby precipitating carbide particles in large amounts; processing the steel into a part material having a predetermined shape; and subjecting the material to carburization treatment through heating at 870 to 950°C in a carburization atmosphere having a carbon potential of 1.0 to 1.5%, followed by quenching and tempering, so that M₇C₃-type and/or M₂₃C₆-type carbide particles account for 50% or more of all the precipitated carbide particles contained in a surface layer region; the carbide particles contained in the surface layer region have an average particle size of 0.2 to 0.4 µm; the amount of the carbide particles contained in the surface layer region is 9 to 30% in area ratio; and the surface layer region has a residual austenite content of 35 to 60%.

The amounts of elements (other than C and Cr) constituting steel employed in the invention according to the claims and the respective numerical parameters for carburization treatment performed in the invention according to claim 8 are determined so as to fall within the aforementioned ranges, for the reasons described below. The reasons for determining the C and Cr contents of steel employed are the same as those described above in the invention according to claim 1. The reasons for determining the amount of M₇C₃-type and/or M₂₃C₆-type carbide particles of all the precipitated carbide particles in the carburized surface layer region are the same as those described above in the invention according to claim 1. The reasons for determining the average particle size and area ratio of the carbide particles in the carburized surface layer region, and the residual austenite content of the surface layer region are the same as those described above in the inventions according to claims 1.

### Si content

Si is an element required for deoxidation during refining of steel. Since Si does not easily form a solid solution with carbide, incorporation of Si exhibits the effect of inhibiting coarsening of carbide particles; i.e., the effect of suppressing growth of carbide particles. That is, incorporation of Si in a small amount is required for obtaining the aforementioned effect, and therefore the lower limit of Si content is determined to be 0.05 wt.%. Meanwhile, when Si is excessively incorporated, spheroidized steel exhibits increased hardness by reinforcement of ferrite, and exhibits impaired machinability before carburization. Therefore, the upper limit of Si content is determined to be 0.70 wt.%.

### Mn content

Mn is an element which stabilizes austenite, and residual austenite content can be readily increased by increasing Mn content. Therefore, the lower limit of Mn content is determined to be 0.05 wt.%. However, since an increase in Mn content lowers the solid solution temperature of carbide during carburization heating, when Mn is excessively incorporated, the amount of undissolved carbide particles is reduced, and the hardness increasing effect by carbide precipitation is reduced in the carburized layer, as well as difficulty is encountered in maintaining long life. An increase in Mn content also causes a problem in terms of impairment of hot workability or machinability. Therefore, in the present invention, required residual austenite content is maintained mainly by increasing C content, and the upper limit of Mn content is determined to be 0.7 wt.%; i.e., a minimum possible level required for maintaining hardenability. The lower limit of Mn content is 0.050 wt.%.

### Al content

Al is an element required for deoxidation during refining of steel. However, an increase in Al content causes formation of an increased amount of alumina non-metallic inclusions, and thus cracks, surface defects, etc. tend to occur during production of steel products. In addition, exfoliation starts from the non-metallic inclusions during rolling fatigue. Therefore, the amount of Al added is preferably limited to a minimum possible level required for deoxidation, and thus the upper limit of Al content is determined to be 0.04 wt.%.

### P content

P segregates at austenite particle boundaries, and lowers toughness of steel. Therefore, the upper limit of P content is determined to be 0.03 wt.%.

### S content

As has been known, S is bonded to Mn to thereby form MnS, and thus machinability is improved. However, an increase in S content causes formation of coarse MnS particles, from which exfoliation starts during rolling fatigue. Therefore, the upper limit of S content is determined to be 0.03 wt.%.

### Ti content

As has been known, Ti is bonded to N to thereby form TiN (i.e., a non-metallic inclusion), and thus rolling fatigue life is shortened. TiN inclusions are increased in amount and coarsened in accordance with an increase in Ti content. Therefore, the upper limit of Ti content is determined to be 0.005 wt.%. For the aforementioned reasons, Ti content is preferably a minimum possible level below the upper limit.

### O content

O is generally bonded to Al contained in steel or a small amount of Ca contained, as an impurity, in steel, and thus is present in the form of oxide inclusions in steel. As has been known, exfoliation starts from such oxide inclusions during rolling fatigue, and rolling fatigue life is shortened. Therefore, conventionally, steel manufacturers have been developing techniques for reducing the O content of steel to a minimum possible level. In view of this background, the upper limit of O content is determined to be 0.0015 wt.%. For the aforementioned reasons, O content is preferably a minimum possible level below the upper limit.

### Mo content

Mo is a carbide-forming element which has a carbon (C) affinity higher than that of Cr, and raises the solid solution temperature of carbide during carburization, thereby increasing the amount of undissolved carbide particles. Therefore, in the present invention, Mo is an important element for increasing the amount of fine carbide particles in a carburized surface layer, thereby increasing hardness. Mo improves hardenability of steel, and contributes to an increase in residual austenite content. In addition, Mo is an element exhibiting the effect of effectively precipitating M₂₃C₆-type carbide particles. Therefore, one or more of the two elements Mo and V, which is described below, are added for the purpose of increasing surface hardness. However, excessive incorporation of Mo causes high production cost, as well as formation of coarse eutectic carbide particles, from which fatigue fracture starts during production of steel products. Therefore, Mo content is determined to be less than 1.0 wt.%. The lower limit of Mo content is not particularly determined, but preferably, Mo is incorporated in an amount of 0.10 wt.% or more so as to obtain the aforementioned effects.

### V content

V is a carbide-forming element having a very high carbon (C) affinity. Since the thus-formed V carbide (i.e., VC) has a solid solution temperature higher than that of Mo carbide, most of VC particles which have existed before carburization treatment do not dissolve in the matrix within the below-described carburization temperature range of the production method of the present invention. The undissolved carbide particles serve as carbide precipitation nuclei in a carburization layer during carburization treatment, and contribute to formation of fine carbide particles. Therefore, one or more of the elements V and Mo, which is described above, are added for the purpose of increasing hardness and improving life. Particularly, VC exhibits a surface hardness increasing effect higher than that of Mo, since most of VC particles do not dissolve in the matrix through heating during carburization. Therefore, single addition of V can attain high hardness, as compared with the case of single addition of Mo. However, excessive incorporation of V inhibits diffusion of C, and thus carbon content tends not to increase in a carburized surface. In addition, the C_{dissol} content is reduced through formation of VC, and required residual austenite content is difficult to maintain. Therefore, V content is determined to be less than 0.50 wt.%. The lower limit of V content is not particularly determined, but preferably, V is incorporated in an amount of 0.05 wt.% or more so as to obtain the aforementioned effects.

### Carburization treatment temperature

When carburization treatment temperature is lower than 870°C, the diffusion rate of carbon is reduced, long period of time and high cost are required for attaining necessary heat treatment quality, and a large amount of soot is generated. In contrast, when carburization treatment temperature exceeds 950°C, the amount of carbide particles which have been formed before carburization treatment and which dissolve in the matrix is increased, and carbide particles precipitated through carburization treatment are reduced in amount and coarsened. In addition, austenite crystal particles are coarsened, and accordingly coarse carbide particles are precipitated at austenite crystal particle boundaries, resulting in impaired performance of a rolling-sliding part. In some cases, high-temperature carburization treatment may cause, depending on a steel composition, reduction in ratio of an M₇C₃-type or M₂₃C₆-type carbide, and an increase in amount of an M₃C-type carbide (which is grown at high rate), leading to further promotion of coarsening of carbide particles. Therefore, carburization treatment temperature must be determined so as to fall within a range of 870 to 950°C. Through carburization treatment at such an appropriate temperature, carbide particles formed before carburization are prevented from dissolving in the matrix, and fine carbon particles can be precipitated in large amounts, resulting in considerable improvement of life. Generally, a short time (about 30 minutes) before quenching performed at the end of a carburization process, temperature is slightly changed for control of the quenching temperature. As used herein, the term "carburization treatment temperature" refers to a temperature before such a change.

### Carbon potential of carburization treatment atmosphere

When carburization treatment temperature is determined to be 870 to 950°C so as to suppress dissolution of carbide particles in the matrix and growth of carbide particles during carburization treatment, and carbon potential is determined to be 1.0% or more, fine carbide particles having an average particle size of 0.2 to 0.4 µm can be dispersed and precipitated in a large amount of 9 to 30% in area ratio in a surface layer region, resulting in considerable improvement of service life in lubricant oil containing foreign matter. The upper limit of carbon potential is determined to be 1.5% so as to prevent generation of a large amount of soot.

### Effects of the Invention

According to the rolling-sliding part of the invention high-hardness, very fine M₇C₃-type and/or M₂₃C₆-type carbide particles account for 50% or more in area ratio of all the precipitated carbide particles in a surface layer region, and the fine carbide particles are precipitated so as to attain an average particle size of 0.2 to 0.4 µm through carburization treatment in consideration of the state of carbide particles precipitated before carburization treatment. In the present invention, the carburized surface layer contains residual austenite in a large amount. A large amount of residual austenite contained therein exhibits the effect of reducing concentration of stress at the edges of indentations, as well as the effect of improving fatigue strength, and contributes to prolongation of service life of a rolling bearing or sliding bearing employing the rolling-sliding part. Needless to say, the rolling bearing exhibits long service life even when used with clean lubricant oil.

According to the rolling-sliding part of the invention since C content and Cr content are optimized in the invention as described in claim 1, high-hardness, fine M₇C₃-type and/or M₂₃C₆-type carbide particles can be precipitated in large amounts in a surface layer region, and thus growth of carbide particles can be reliably suppressed during carburization. As in the case of the invention as described in claim 1, a large amount of residual austenite exhibits the effect of reducing concentration of stress at the edges of indentations, as well as the effect of improving fatigue strength. Therefore, the rolling-sliding part exhibits a prolonged service life, regardless of the cleanliness of lubricant oil employed therewith.

According to the rolling-sliding part of the invention since the total carbon content of the surface layer region is determined so as to fall within an appropriate range, the area ratio of carbide particles contained in the surface layer region is controlled so as to fall within an appropriate range after carburization treatment. Therefore, a rolling bearing or sliding bearing employing the rolling-sliding part exhibits a prolonged service life.

According to the rolling-sliding part of the invention as described in claim 3, since the area ratio of carbide particles contained in the surface layer region is optimized, further excellent service life improving effect is obtained.

According to the rolling-sliding part of the invention as described in claim 4, since the residual austenite content of the surface layer region is optimized, further excellent service life improving effect is obtained.

According to the rolling-sliding part of the invention since the content ranges of all the elements added are optimized, the resultant composition is advantageous for precipitating fine M₇C₃-type or M₂₃C₆-type carbide particles in large amounts as in the case of the invention and Ti or Al inclusions, from which fatigue fracture starts, are reduced in amount. Therefore, the rolling-sliding part exhibits a prolonged service life.

The rolling bearing of the invention as described in claim 5 exhibits a prolonged service life in lubricant oil containing foreign matter or in a clean lubricant oil.

The rolling-sliding part production method of the invention as described in claim 6 can reliably produce a part in which fine M₇C₃-type or M₂₃C₆-type carbide particles are precipitated in large amounts, and therefore greatly contributes to improvement of service life of a rolling-sliding part.

### Best Mode for Carrying Out the Invention

The invention will next be described by way of Examples and Comparative Examples.

### Examples 1 to 10 and Comparative Examples 1 to 18

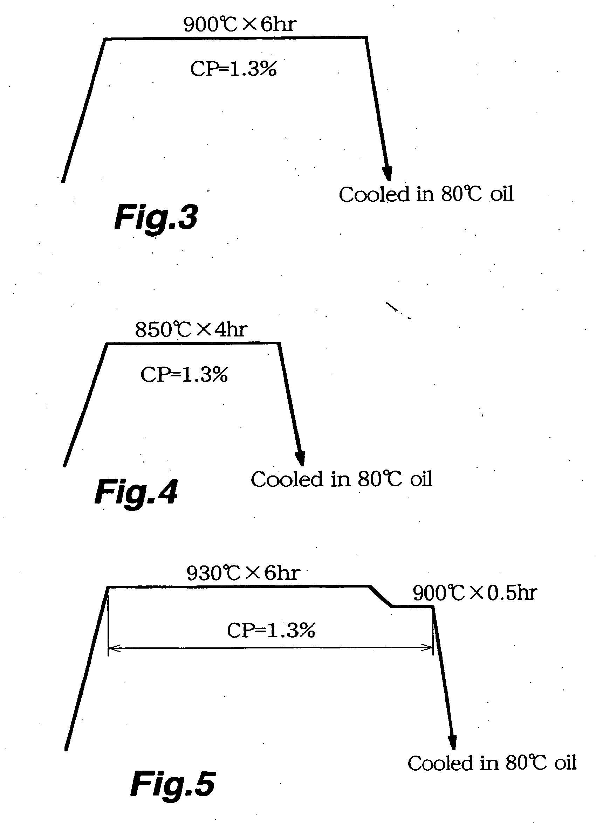

Steel specimens of 17 different compositions shown in Table 1 were provided and were subjected to spheroidizing annealing treatment so as to obtain excellent machinability and also to have a large amount of carbide particles precipitated before carburizing treatment, which is an aforementioned requirement, in order to attain high hardness after the carburizing treatment. Subsequently, 28 semifinal inner ring products for a model 6206 rolling bearing were formed, followed by heat treatment under the conditions shown in FIGs. 3 to 9, to thereby produce inner rings (Example products 1 to 10 and Comparative Example products 1 to 18). In order to determine the number of carbide particles precipitated through the spheroidizing annealing treatment, specimens after the spheroidizing annealing treatment but before the carburizing treatment were observed under a scanning electron microscope at a ×10,000 magnitude.

**[Table 1]**

| Steel type | Composition (wt.%) | | | | | | | | | | |
|---|---|---|---|---|---|---|---|---|---|---|---|
| | C | Si | Mn | P | S | Cr | Mo | V | Al | Ti | O |
| A | 0.75 | 0.48 | 0.43 | 0.020 | 0.009 | 4.05 | 0.01 | 0.35 | 0.021 | 0.0019 | 0.0009 |
| B | 0.78 | 0.51 | 0.40 | 0.019 | 0.004 | 3.56 | 0.16 | 0.22 | 0.018 | 0.0022 | 0.0010 |
| C | 0.79 | 0.27 | 0.32 | 0.015 | 0.014 | 3.29 | 0.35 | | 0.019 | 0.0032 | 0.0008 |
| D | 0.80 | 0.48 | 0.41 | 0.022 | 0.005 | 3.60 | 0.43 | 0.30 | 0.021 | 0.0028 | 0.0008 |
| E | 0.81 | 0.33 | 0.62 | 0.017 | 0.008 | 4.22 | | 0.46 | 0.025 | 0.0018 | 0.0009 |
| F | 0.81 | 0.54 | 0.39 | 0.020 | 0.002 | 4.51 | 0.71 | | 0.020 | 0.0015 | 0.0007 |
| G | 0.84 | 0.61 | 0.52 | 0.015 | 0.011 | 3.88 | 0.34 | 0.25 | 0.017 | 0.0026 | 0.0012 |
| H | 0.88 | 0.45 | 0.41 | 0.016 | 0.008 | 4.75 | 0.15 | 0.34 | 0.015 | 0.0018 | 0.0013 |
| I | 0.61 | 0.55 | 0.44 | 0.018 | 0.005 | 3.49 | 0.16 | 0.27 | 0.020 | 0.0019 | 0.0011 |
| J | 0.74 | 0.46 | 1.36 | 0.016 | 0.010 | 3.28 | 0.36 | | 0.019 | 0.0022 | 0.0007 |
| K | 0.76 | 0.40 | 0.50 | 0.014 | 0.007 | 2.81 | 0.14 | 0.29 | 0.022 | 0.0030 | 0.0009 |
| L | 0.80 | 0.52 | 0.40 | 0.018 | 0.007 | 5.74 | 0.45 | 0.17 | 0.018 | 0.0015 | 0.0009 |
| M | 0.84 | 0.35 | 0.39 | 0.020 | 0.003 | 4.11 | 1.18 | | 0.017 | 0.0020 | 0.0012 |
| N | 0.83 | 0.45 | 0.47 | 0.019 | 0.009 | 3.97 | 0.25 | 0.66 | 0.023 | 0.0018 | 0.0011 |
| O | 0.98 | 0.41 | 0.42 | 0.015 | 0.004 | 4.63 | 0.77 | 0.25 | 0.017 | 0.0021 | 0.0009 |
| P | 0.21 | 0.29 | 0.81 | 0.022 | 0.015 | 1.10 | | | 0.035 | 0.0036 | 0.0014 |
| Q | 1.00 | 0.28 | 0.39 | 0.017 | 0.003 | 1.46 | | | 0.017 | 0.0015 | 0.0007 |

In all steel species in Table 1, the balance is Fe and the inevitable impurities that exist in the steel.

The heat treatment conditions 1 shown in FIG. 3 are as follows: heating at 900°C for 6 hours in a carburizing atmosphere (carbon potential 1.3%), followed by quenching in oil (80°C).

The heat treatment conditions 2 shown in FIG. 4 are as follows: heating at 850°C for 4 hours in a carburizing atmosphere (carbon potential 1.3%), followed by quenching in oil (80°C).

The heat treatment conditions 3 shown in FIG. 5 are as follows: heating at 930°C for 6 hours in a carburizing atmosphere (carbon potential 1.3%), followed by heating at 900°C for 0.5 hours in a carburizing atmosphere (carbon potential 1.3%) and subsequent quenching in oil (80°C).

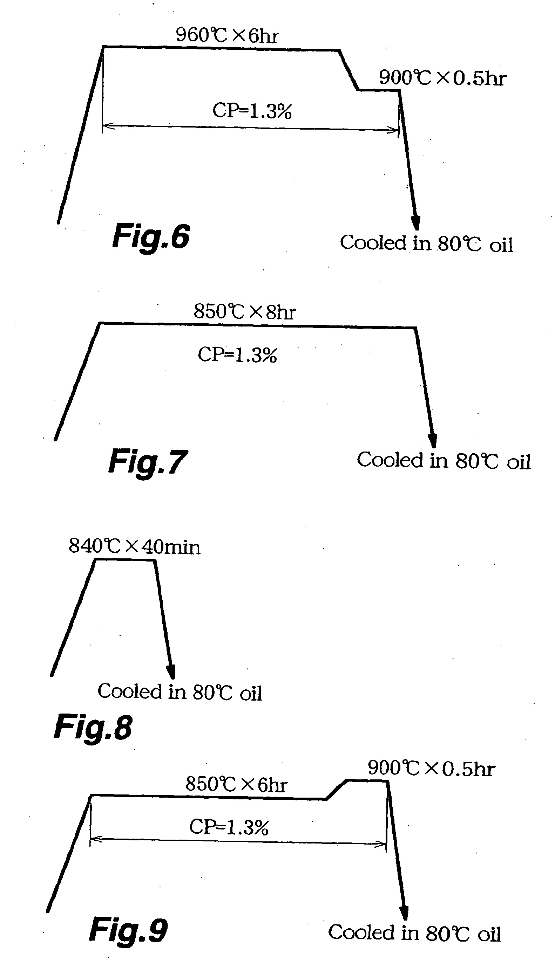

The heat treatment conditions 4 shown in FIG. 6 are as follows: heating at 960°C for 6 hours in a carburizing atmosphere (carbon potential 1.3%), followed by heating at 900°C for 0.5 hours in a carburizing atmosphere (carbon potential 1.3%) and subsequent quenching in oil (80°C).

The heat treatment conditions 5 shown in FIG. 7 are as follows: heating at 850°C for 8 hours in a carburizing atmosphere (carbon potential 1.3%) followed by quenching in oil (80°C).

The heat treatment conditions 6 shown in FIG. 8 are as follows: heating at 850°C for 40 minutes followed by quenching in oil (80°C).

The heat treatment conditions 7 shown in FIG. 9 are as follows: heating at 850°C for 6 hours in a carburizing atmosphere (carbon potential 1.3%), followed by heating at 900°C for 0.5 hours in a carburizing atmosphere (carbon potential 1.3%) and subsequent quenching in oil (80°C).

Although not shown in the drawings, all the heat treatment conditions 1 through 7 described above are followed by a tempering treatment of heating at 160°C for 2 hours and subsequent cooling in air.

In the heat treatment conditions 1 to 7 described above, the heat treatment conditions 1 and 3 meet the requirements of the invention described in claim 8, while the heat treatment conditions 2, 4, 5, 6, and 7 do not meet the requirements of the invention described in claim 8.

Inner rings of Example products 1 to 10 and Comparative Example products 1 to 18 were produced from predetermined steel species under predetermined heat treatment conditions listed in Table 2. Measurements of the following parameters were performed on each of the inner rings thus produced: surface hardness (HRC) of a raceway surface of an inner ring after the heat treatment, total carbon content in the surface layer region of a raceway surface, maximum particle size of carbide precipitates in the surface layer region of a raceway surface, mean particle size of carbide precipitates in the surface layer region of a raceway surface, and a content of residual austenite at the depth of 50 µm from the surface through x-ray diffractometry. The number of carbide precipitates in non-carburized layer after the carburizing treatment was measured, in the same manner as the measurement before the carburizing treatment, under a scanning electron microscope at a x10,000 magnification to thereby ascertain the precipitation state of the carbides after carburizing treatment. As has been mentioned above, the measurement of the number of carbide precipitates in a non-carburized layer after the carburizing treatment is useful for determining the optimum degree of carbide dissolved to form a solid solution through the carburizing treatment, which can be adjusted by choosing an appropriate carburizing temperature. As a result of this measurement, the optimum temperature range of carburizing treatment can be determined.

The species of carbides in a surface layer region were identified through x-ray diffractometry and a total of M₇C₃ carbide content and M₂₃C₆ carbide content was estimated by area ratio on an x-ray diffraction diagram by comparing peak intensities of respective carbides. The results are shown in Table 2.

**[Table 2]**

| | | Steel type | Thermal treatment condition | Surface hardness (HRC) | Total carbon content (%) | Carbide area ratio | Av. carbide particle size | Residual austenite content | L10 life, h | L10 life ratio | Area ratio of M₇C₃/M₂₃C₆ carbide |
|---|---|---|---|---|---|---|---|---|---|---|---|
| Example | 1 | A | 1 | 64.2 | 1.3 | 13.2 | 0.37 | 35 | 65 | 11.4 | 65 |
| | 2 | B | 1 | 64 | 1.2 | 9.5 | 0.3 | 38 | 66 | 11.6 | 85 |
| | 3 | | 3 | 64.6 | 1.3 | 12.0 | 0.34 | 43 | 85 | 14.9 | 75 |
| | 4 | C | 3 | 64 | 1.31 | 12.5 | 0.38 | 42 | 65 | 11.4 | 60 |
| | 5 | | 1 | 63.4 | 1.28 | 11 | 0.39 | 45 | 77 | 13.5 | 80 |
| | 6 | D | 1 | 64 | 1.33 | 12.2 | 0.31 | 46 | 95 | 16.7 | 80 |
| | 7 | E | 3 | 63.3 | 1.25 | 10.5 | 0.3 | 40 | 70 | 12.3 | 95 |
| | 8 | F | 1 | 64.5 | 1.4 | 15.5 | 0.38 | 35 | 68 | 11.9 | 95 |
| | 9 | G | 1 | 64.1 | 1.38 | 13.8 | 0.3 | 44 | 83 | 14.6 | 75 |
| | 10 | H | 1 | 64 | 1.3 | 13.2 | 0.32 | 40 | 80 | 14.0 | 95 |
| Comparative Example | 1 | I | 1 | 63.3 | 1.1 | 8.5 | 0.55 | 47 | 21 | 3.7 | 95 |
| | 2 | J | 1 | 63.5 | 1.3 | 9.5 | 0.5 | 45 | 31 | 5.4 | 70 |
| | 3 | K | 1 | 63.4 | 1.4 | 12.6 | 0.66 | 46 | 35 | 6.1 | 20 |
| | 4 | L | 1 | 63.8 | 1.2 | 14 | 0.47 | 34 | 32 | 5.6 | 100 |
| | 5 | M | 1 | 63.6 | 1.4 | 13.8 | 0.67 | 55 | 19 | 3.3 | 95 |
| | 6 | N | 1 | 65.2 | 1.1 | 8.5 | 0.35 | 28 | 23 | 4.0 | 100 |
| | 7 | O | 1 | 64.5 | 1.4 | 14.5 | 0.8 | 43 | 15 | 2.6 | 95 |
| | 8 | B | 7 | 63.5 | 1 | 7.6 | 0.31 | 28 | 21 | 3.7 | 95 |
| | 9 | | 4 | 64 | 1.5 | 14.5 | 0.55 | 47 | 42 | 7.4 | 35 |
| | 10 | D | 7 | 63.2 | 1 | 8 | 0.29 | 28 | 25 | 4.4 | 100 |
| | 11 | | 4 | 64.2 | 1.5 | 15.8 | 0.68 | 50 | 38 | 6.7 | 45 |
| | 12 | C | 4 | 64.3 | 1.4 | 12.3 | 0.61 | 44 | 40 | 7.0 | 50 |
| | 13 | H | 4 | 64.3 | 1.4 | 13.2 | 0.56 | 40 | 45 | 7.9 | 95 |
| | 14 | P | 5 | 64.8 | 1.3 | 12.9 | 0.42 | 32 | 30.1 | 5.3 | 0 |
| | 15 | Q | 2 | 64.8 | 1.3 | 9.5 | 0.49 | 29 | 25.5 | 4.5 | 0 |
| | 16 | | 5 | 64.3 | 1.4 | 12.9 | 0.56 | 35 | 36.5 | 6.4 | 0 |
| | 17 | | 1 | 61.7 | 1.3 | 8.9 | 0.62 | 44 | 10.2 | 1.8 | 0 |
| | 18 | | 6 | 61.8 | 1 | 6.4 | 0.34 | 8 | 5.70 | 1.0 | 0 |

### Life Test

Inner rings of Examples 1 to 10 and Comparative Examples 1 to 18 were assembled with outer rings and balls which had been made from JIS SUJ2 and had undergone conventional carbonitriding treatment, to thereby produce model 6206C3 ball bearings. Using these ball bearings, a life test was performed using lubricating oil containing foreign matter. The test conditions are shown in Table 3.

**[Table 3]**

| | |
|---|---|
| Load | Fr = 9000 N/set |
| Rotation speed | 2500 rpm |
| Foreign matter | High speed steel powder, 0.06 mass% (hardness: 730 HV, particle size: 100 to 150 µm) |
| Lubrication | Turbine oil #68, oil bath (air stirring) |
| Oil temperature | Spontaneous temperature rise (about 100°C) |
| Calculated life (Lh) | 67.8 h |
| Test method | Sudden death test (2 sets × 5) |
| Test sample Lot No. | 6206 |

With a tester whose specifications are given in Table 3, two ball bearings can be tested at a time. A radial load in Table 3 means a load applied in a radial direction to each ball bearing.

The results of the life test are also shown in Table 2.

In Table 2, the parameter L₁₀ life ratio was obtained as follows. Two ball bearings using identical inner rings were set in a tester, and the time until any one of the two ball bearings was broken was measured. The measurement was performed 5 times, and the average time value was defined as the L₁₀ life of the inner ring. The L₁₀ life of a sample of Comparative Example 18 (JIS SUJ2, with quenching and tempering) was taken as 1.

As is clearly seen from Table 2, samples of Comparative Examples 1 to 18, which do not fully fulfill the requirements of the invention of claims 1, 2, and 6, have been found to exhibit much shorter service life.

That is, samples of Comparative Examples 1 to 5, 7, 9, 11 to 14, 16, and 17 exhibit short service lives of the bearings due to the average particle size of carbide precipitates in the surface layer region being over 0.4 µm. Among the samples, the short service lives of those of Comparative Examples 1 to 5 and 7 are attributable to the fact that carbide precipitation did not occur as prescribed because the components are not within the scope specified in the present invention. Especially in the case of Comparative Example 3, since the Cr content was low, the area ratio of M₇C₃ carbide and M₂₃C₆ carbide precipitates significantly dropped to as small as 20% (which means increased percentage of M₃C carbide precipitates), and as a result the service life was shortened through the coarse particle size of carbide precipitates. In the case of Comparative Examples 5 and 7, due to an excessive Mo content (Comparative Example 5) or C content (Comparative Example 7), coarse eutectic carbides were nucleated, and the resulting big particle size of carbides brought a short service life.

In Comparative Examples 9 and 11 to 13, since the carburizing temperature was an excessively high temperature of 960°C, the carbide precipitates became coarse. Particularly in Comparative Examples 9 and 11, the short service lives are not merely due to high carburizing temperature. As M₃C carbide has a high growth rate under heat during carburizing treatment, a high treatment temperature increased the amount of M₃C carbide, and in turn decreased the amounts of M₇C₃ and M₂₃C₆ carbides to less than 50% in area ratio. Presumably this phenomenon caused coarsening of carbide particles and short service lives.

In Comparative Examples 6, 8, 10, and 18, the service lives were shortened due to insufficient amounts of the residual austenite in the surface layer region.

In Comparative Examples 8 and 10, insufficient C diffusion during the carburizing treatment due to a low treatment temperature caused a short service life. In Comparative Example 6, excessive addition of V suppressed the carburizing efficiency, and nucleation of a large amount of VC reduced the C solubility into a matrix, whereby an amount of residual austenite was reduced, resulting in a shortened bearing service life. Further, in the case of Comparative Example 18, in addition to the fact that the composition is beyond the scope of the invention, carburizing treatment was not performed. Therefore, not only the hardness was poor but also the amount of residual austenite was very small, and thus, the service life was significantly deteriorated.

Comparative Examples 15 to 17 are drawn to comparative samples in which inner rings were made of SUJ2 carburized under a high percentage carbon potential environment. As described above, either M₇C₃ carbide or M₂₃C₆ carbide-having high hardness and small growth rate-was not present in the produced carbides, growth rate of carbides during the carburizing treatment was very high and the particle size of all the resulting particles became very large; i.e., as large as over 0.4 µm in an average. Moreover, when an amount of residual austenite exceeded 40% as was the case of Comparative Example 17, surface hardness HRC became less than HRC of 62. By these reasons, the service life was much shortened. Although not shown in Table 2, even though a composition was within the scope of the present invention, in the case where an amount of the residual austenite was intentionally raised to more than 60% by adjusting carburizing treatment conditions, an HRC of 62 or higher was not achieved, and the service life was shortened.

As compared to the above described Comparative Examples, Examples 1 to 10 were confirmed to have excellent service lives of more than 10 times as long as the service life of the samples of Comparative Example 18 (JIS SUJ2, with quenching and tempering), even though tested under severe conditions where high-speed steel powder was included as a foreign matter.

Though no data are given in the Tables, as described hereinabove in relation to the estimation method, the precipitation state of carbides in a non-carburized layer was investigated before carburizing treatment (but after spheroidizing annealing treatment) and after carburizing treatment. As a result, samples of Examples 1 to 10 and those Comparative Examples whose compositions fall within the range of present invention were all confirmed to contain more than 1,500,000 carbide particles/mm² (1.65 million to 2.05 million carbide particles/mm²) before carburizing treatment, and samples of Examples 1 to 10, which had been subjected to a carburizing treatment under appropriate conditions, exhibited to have more than 300,000 carbide particles/mm² in a non-carburized layer after carburizing treatment.

Meanwhile, in the case of Comparative Examples 9 and 11 to 13 where samples contained a sufficient number of fine carbide particles before carburizing treatment but were carburized at an excessively high temperature, or in the case of SUJ2 (steel species Q) which did not contain a sufficient number of carbide particles before carburizing treatment (Q-steel: 1.08 million carbides/mm²) because of an inappropriate composition, carbide precipitates of more than 300,000/mm² after carburizing treatment could not be attained, therefore excellent service life was not achieved either.

From the above results, those factors as described below were confirmed to be important in order to realize a long service life: to optimize the composition, for example through addition of a larger amount of Cr than in ordinary steel, and to have a large amount of fine carbide particles precipitated before carburizing treatment, and to perform a carburizing treatment under a relatively low carburizing temperature so as not to impair the productivity to avoid the occurrence of carbide dissolving into a matrix, to thereby have a large amount of fine carbide particles precipitated in a carburized layer even after carburizing treatment.

### Brief Description of the Drawings

[FIG. 1] A graph showing the relationship among an area ratio of carbides, an average carbide size, and L₁₀ life ratio which were obtained from the evaluation test performed on samples of the Examples and Comparative Examples.
[FIG. 2] A graph showing the relationship between an area ratio of carbides in a surface layer region and a total carbon amount in a surface layer region obtained from the testing results on samples of the Examples.
[FIG. 3] A diagram showing the heat treatment conditions 1.
[FIG. 4] A diagram showing the heat treatment conditions 2.
[FIG. 5] A diagram showing the heat treatment conditions 3.
[FIG. 6] A diagram showing the heat treatment conditions 4.
[FIG. 7] A diagram showing the heat treatment conditions 5.
[FIG. 8] A diagram showing the heat treatment conditions 6.
[FIG. 9] A diagram showing the heat treatment conditions 7.

## Claims

1. A rolling-sliding part formed of steel containing C:0.7 to 0.9 wt%, Si: 0.05 to 0.7 wt%, Mn: 0.05 to 0.7 wt%, Cr: 3.2 to 5.0 wt%, Al: 0.04 wt% or less, P: 0.03 wt% or less, S: 0.03 wt% or less, Ti: 0.005 wt% or less, O: 0.0015 wt% or less, at least one of Mo: less than 1.0 wt% and V: less than 0.50 wt%, and balance Fe and unavoidable impurities, having, in a surface thereof, a carburized surface layer region, wherein the surface layer region contains precipitated carbide particles in an amount of 9 to 30% in area ratio; M7C3-type and/or M23C6-type carbide particles account for 50% or more in area ratio of all the precipitated carbide particles contained in the surface layer region; the carbide particles contained in the surface layer region have an average particle size of 0.2 to 0.4 µm; and the surface layer region has a residual austenite content of 35 to 60% and the amount of carbide particles remaining in an internal non-carburized layer being 300,000 particles/mm² or more.

2. A rolling-sliding part as described in claim 1, wherein the surface layer region has a total carbon content of 1.2 to 1.8 wt.%.

3. A rolling-sliding part as described in claim 1 or 2, wherein the surface layer region contains carbide particles in an amount of 10 to 20% in area ratio.

4. A rolling-sliding part as described in any of claims 1, 2 or 3, wherein the surface layer region has a residual austenite content of 40 to 50%.

5. A rolling bearing comprising an inner bearing ring, an outer bearing ring, and a rolling element, wherein at least one of the inner bearing ring, the outer bearing ring, and the rolling element is formed of a part as recited in any of claims 1 to 4.

6. A method for producing a rolling-sliding part, **characterized in that** the method comprises subjecting, to spheroidizing annealing treatment, steel containing C: 0.7 to 0.9 wt.%, Si: 0.05 to 0.7 wt.%, Mn: 0.05 to 0.7 wt.%, Cr: 3.2 to 5.0 wt.%, Al: 0.04 wt.% or less, P: 0.03 wt.% or less, S: 0.03 wt.% or less, Ti: 0.005 wt.% or less, O: 0.0015 wt.% or less, at least one of Mo: less than 1.0 wt.% and V: less than 0.50 wt.%, and balance Fe and unavoidable impurities: balance, so that carbide particles have an average particle size of 0.1 to 0.5 µm, and the number of precipitated carbide particles having a size of 0.1 µm or more is 1,500,000 particles or more per mm²; processing the steel into a part material having a predetermined shape; and subjecting the material to carburization treatment through heating at 870 to 950 deg. C in a carburization atmosphere having a carbon potential of 1.0 to 1.5%, followed by quenching and tempering, so that the amount of all the carbide particles contained in the surface layer region becomes 9 to 30% in area ratio, that a portion of the carbides which are present in a surface layer region, the portion accounting for 50% or more in area ratio, is made to be constituted by M7C3-type and/or M23C6-type carbide particles, and that the carbide particles contained in the surface layer region have an average particle size of 0.2 to 0.4 µm and the surface layer region has a residual austenite content of 35 to 60%.

7. A method for producing a rolling-sliding part according to claim 8, wherein the amount of carbide particles remaining in an internal non-carburized layer after carburization treatment is 300,000 particles/mm² or more.

## Patentansprüche

1. Roll-Gleitelement, geformt aus Stahl und enthaltend: C: 0,7 bis 0,9 Gewichts-%; Si: 0,05 bis 0,7 Gewichts-%: Mn: 0,05 bis 0,7 Gewichts-%; Cr: 3,2 bis 5,0 Gewichts-%; Al: 0,04 Gewichts-% oder weniger; P: 0,03 Gewichts-% oder weniger; S: 0,03 Gewichts-% oder weniger; Ti: 0,005 Gewichts-% oder weniger; O: 0,0015 Gewichts-% oder weniger, sowie entweder Mo: weniger als 1,0 Gewichts-% oder V: weniger als 0,50 Gewichts-%; und ausgleichendes Fe sowie unvermeidbare Unreinheiten, welches auf einer seiner Oberflächen einen aufgekohlten Oberflächenschichtbereich aufweist, welcher Oberflächenschichtbereich abgelagerte Carbidpartikel in einer Menge von 9 bis 30% im Flächenverhältnis aufweist, sowie Carbidpartikel vom M7C3-Typ und/oder vom M23C6-Typ in 50% oder mehr im Flächenverhältnis aller abgelagerten Carbidpartikel, die in dem Oberflächenschichtbereich enthalten sind, wobei die Carbidpartikel, die in dem Oberflächenschichtbereich enthalten sind, eine durchschnittliche Partikelgröße von 0,2 bis 0,4 µm aufweisen, und der Oberflächenschichtbereich einen Restaustenidgehalt von 35 bis 60 % aufweist, und die Menge von Carbidpartikeln, die in einer inneren nicht aufgekohlten Schicht verbleiben, 300.000 Partikel/mm² oder mehr beträgt.

2. Roll-Gleitelement gemäß Anspruch 1, bei welchem der Oberflächenschichtbereich einen Gesamtkohlenstoffgehalt von 1,2 bis 1,8 Gewichts-% aufweist.

3. Roll-Gleitelement gemäß Anspruch 1 oder 2, bei welchem der Oberflächenschichtbereich Carbidpartikel in einer Menge von 10 bis 20 % im Flächenverhältnis enthält.

4. Roll-Gleitelement gemäß einem der Ansprüche 1, 2 oder 3, bei welchem der Oberflächenschichtbereich einen Restaustenidgehalt von 40 bis 50 % aufweist.

5. Wälzlager, umfassend einen inneren Lagerring, einen äußeren Lagerring und ein Rollelement, bei welchem zumindest entweder der innere Lagerring, der äußere Lagerring, oder das Rollelement als ein Element gemäß einem der Ansprüche 1 bis 4 ausgebildet ist.

6. Verfahren zur Herstellung eines Roll-Gleitelements, **dadurch gekennzeichnet, dass** das Verfahren das Aussetzen von Stahl einer Vergütung durch Weichglühen umfasst, welcher Stahl enthält: C: 0,7 bis 0,9 Gewichts-%; Si: 0,05 bis 0,7 Gewichts-%; Mn: 0,05 bis 0,7 Gewichts-%; Cr: 3,2 bis 5,0 Gewichts-%; Al: 0,04 Gewichts-% oder weniger; P: 0,03 Gewichts-% oder weniger; S: 0,03 Gewichts-% oder weniger; Ti: 0,005 Gewichts-% oder weniger; O: 0,0015 Gewichts-% oder weniger, zumindest entweder Mo: weniger als 1,0 Gewichts-% oder V: weniger als 0,50 Gewichts-%, und ausgleichendes Fe und unvermeidbare Verunreinigungen, derart, dass Carbidpartikel eine durchschnittliche Partikelgröße von 0,1 bis 0,5 µm aufweisen, und die Anzahl abgelagerter Carbidpartikel mit einer Größe von 0,1 µm oder mehr gleich 1.500.000 Partikel oder mehr pro mm² ist; Verarbeitung des Stahls zu einem Teilmaterial mit einer vorbestimmten Form; und Aussetzen des Materials einer Aufkohlbehandlung durch Erhitzen bei 870 bis 950°C in einer Aufkohlatmosphäre mit einem Kohlenstoffpotential von 1,0 bis 1,5%, gefolgt von Anlassen und Vergüten, so dass die Menge aller Carbidpartikel, die in dem Oberflächenschichtbereich enthalten sind, 9 bis 30% im Flächenverhältnis wird, dass ein Bereich der Carbide, die in einem Oberflächenschichtbereich vorhanden sind, welcher Bereich 50% oder mehr im Flächenverhältnis umfasst, gebildet wird durch Carbidpartikel vom M7C3-Typ und/oder vom M23C6-Typ, und dass die Carbidpartikel, die in dem Oberflächenschichtbereich enthalten sind, eine durchschnittliche Partikelgröße von 0,2 bis 0,4 µm aufweisen, und dass der Oberflächenschichtbereich einen Restaustenidgehalt von 35 bis 60% aufweist.

7. Verfahren zur Herstellung eines Roll-Gleitelements gemäß Anspruch 8, bei welchem die Menge der Carbidpartikel, die in einer inneren nicht aufgekohlten Schicht nach der Aufkohlbehandlung verbleiben, 300.000 Partikel/mm² oder mehr beträgt.

## Revendications

1. Pièce roulante-coulissante formée d'acier contenant C : 0,7 à 0,9 % en poids, Si : 0,05 à 0,7 % en poids, Mn : 0,05 à 0,7 % en poids, Cr : 3,2 à 5,0 % en poids, Al : 0,04 % en poids ou moins, P ; 0,03 % en poids ou moins, S : 0,03 % en poids ou moins, Ti : 0,005 % en poids ou moins, O : 0,0015 % en poids ou moins, au moins l'un de Mo : moins de 1,0 % en poids et V : moins de 0,50 % en poids, et le complément en Fe et des impuretés inévitables, ayant, dans une surface de celle-ci, une région de couche de surface cémentée, la région de couche de surface contenant des particules de carbure précipitées en une quantité de 9 à 30 % en rapport d'aire ; des particules de carbure de type M7C3 et/ou de type M23C6 représentent 50 % ou plus en rapport d'aire de l'ensemble des particules de carbure précipitées contenues dans la région de couche de surface ; les particules de carbure contenues dans la région de couche de surface ont une taille de particule moyenne de 0,2 à 0,4 µm ; et la région de couche de surface a une teneur en austénite résiduelle de 35 à 60 % et la quantité de particules de carbure résiduelle dans une couche non cémentée interne étant de 300 000 particules/mm² ou plus.

2. Pièce roulante-coulissante selon la revendication 1, dans laquelle la région de couche de surface a une teneur totale en carbone de 1,2 à 1,8 % en poids.

3. Pièce roulante-coulissante selon la revendication 1 ou 2, dans laquelle la région de couche de surface contient des particules de carbure en une quantité de 10 à 20 % en rapport d'aire.

4. Pièce roulante-coulissante selon l'une quelconque des revendications 1, 2 ou 3, dans laquelle la région de couche de surface a une teneur en austénite résiduelle de 40 à 50 %.

5. Palier à roulement comprenant une bague de roulement interne, une bague de roulement externe, et un élément de roulement, dans lequel au moins l'un de la bague de roulement interne, la bague de roulement externe, et l'élément de roulement est formé d'une pièce selon l'une quelconque des revendications 1 à 4.

6. Procédé pour produire une pièce roulante-coulissante, **caractérisé en ce que** le procédé comprend la soumission, à un traitement de recuit de globulisation, d'un acier contenant C : 0,7 à 0,9 % en poids, Si : 0,05 à 0,7 % en poids, Mn : 0,05 à 0,7 % en poids, Car : 3,2 à 5,0 % en poids, Al : 0,04 % en poids ou moins, P : 0,03 % en poids ou moins, S : 0,03 % en poids ou moins, Ti : 0,005 % en poids ou moins, O : 0,0015 % en poids ou moins, au moins l'un de Mo : moins de 1,0 % en poids et V : moins de 0,50 % en poids, et le complément en Fe et des impuretés inévitables : complément, de sorte que les particules de carbure ont une taille de particule moyenne de 0,1 à 0,5 µm et le nombre de particules de carbure précipitées ayant une taille de 0,1 µm ou plus soit de 1 500 000 particules ou plus par mm² ; le traitement de l'acier en un matériau de pièce ayant une forme prédéterminée ; et la soumission du matériau à un traitement de cémentation par chauffage à 870 à 950 °C dans une atmosphère de cémentation ayant un potentiel de carbone de 1,0 à 1,5 %, suivi par une trempe et un revenu, de sorte que la quantité de l'ensemble des particules de carbure contenues dans la région de couche de surface devienne de 9 à 30 % en rapport d'aire, qu'une partie des carbures qui sont présents dans une région de couche de surface, la partie représentant 50 % ou plus en rapport d'aire, est formée de manière à être constituée par des particules de carbure de type M7C3 et/ou de type M23C6, et que les particules de carbure contenues dans la couche de région de surface aient une taille de particule moyenne de 0,2 à 0,4 µm et la région de couche de surface ait une teneur en austénite résiduelle de 35 à 60 %.

7. Procédé pour produire une pièce roulante-coulissante selon la revendication 8, dans lequel la quantité de particules de carbure résiduelle dans une couche non cémentée interne après traitement de cémentation est de 300 000 particules/mm² ou plus.
